# EUROPEAN PATENT SPECIFICATION

(11) **EP 0 707 544 B1**
(45) Date of publication and mention of the grant of the patent: **12.03.1997**
(21) Application number: 94921866.3
(22) Date of filing: 08.07.1994
(51) Int. Cl.: B60N 2/02, B60R 22/26

(54) **SEAT RAIL ASSEMBLY**
SITZSCHIENENZUSAMMENBAU
ENSEMBLE DE RAILS DE SIEGE

(30) Priority: 09.07.1993 NO 932509
(43) Date of publication of application: 24.04.1996
(73) Proprietor: NORSK HYDRO A/S, 0240 Oslo 2 (NO)
(72) Inventor: CLAUSEN, Edvin, List, DK-6270 T nder (DK); HANSEN, Kathy, DK-6270 Tonder (DK)
(74) Representative: Kraus, Jürgen Helmut, Dipl.-Phys. Dr.
(86) International application number: NO9400122
(87) International publication number: WO9501888

(56) References cited:
- FR-A- 2 106 960
- US-A- 4 818 022
- PATENT ABSTRACTS OF JAPAN, Vol 14, No 181, M-961, abstract of JP,A,2 031 967 (SUZUKI MOTOR CO LTD), 1 February 1990 (01.02.90)

## Description

The present invention relates to a seat rail assembly in a motor vehicle and more particularly to seat rails installed in personal vehicles provided with a pair of front doors only as set forth in the preamble of claim 1.

Customarily, in personal vehicles the seat rail assembly comprises a bottom rail fastened to the vehicle floor and a slideably attached top rail. The top rail is applied for fastening of safety belts and vehicle seats and provided with means for stepwise limited adjustment of the front seats in the longitudinal direction. In case of cars provided with only a pair of front doors the front seats are designed to move forward in order to give more space for entering and leaving the rear seats. In order to facilitate this function the seat rail assembly is more complicated, e.g. provided by an additional rail on the top or next to the upper rail.

However, these known systems suffer from a number of inherent disadvantages such as requirements for tolerance accumulation, complexity of the system and, especially, weight increase due to the added extra rail.

It is therefore an object of the present invention to provide a new and improved seat rail assembly avoiding the above difficulties and providing a simplified, light weight rail construction system eliminating the need of the extra rail and significantly improving the possibility for safe and fast evacuation of persons from the rear seats in case of a (frontal) collision of vehicles.

This object is achieved by means of the characterising features of claim 1.

Another object according to the present invention is to provide an improved locking system for interconnecting and releasing of the new rail system components.

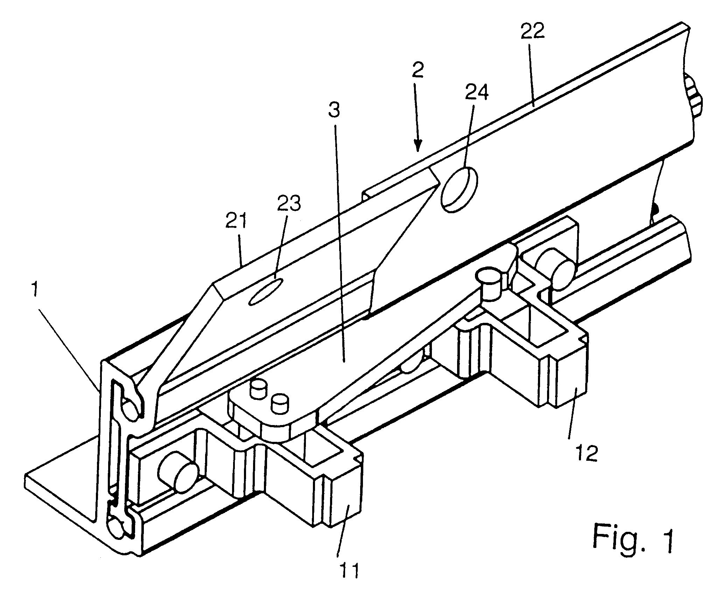

These and other objects and specific features characterizing the seat rail construction are achieved in accordance with the present invention by provision of a seat rail system and a locking system as apparent from the attached claims 1-5, the description and accompanying drawings, Figs. 1-2, where
- Fig. 1: shows in a perspective rear end view the new rail system assembly,
- Fig. 2: shows in a perspective rear end view another employable embodiment variant of the rail system.

Referring to the drawings, and particularly to Fig. 1, the seat rail assembly comprises a first bottom rail 1 and a second top rail 2. The second rail is composed of two adjacent sections 21,22 being attached to the first rail 1 and mutually arranged in a butt to butt manner as a rear section 21 and a front section 22, respectively, with reference to the attempted location of the rail system in the vehicle. The first bottom rail 1 is fastened to the vehicle floor (not shown in the Figures) in a customary manner by means of bolts, screws etc. The rear rail section 21 exhibits bigger wall thickness compared to the wall thickness of the front section 22.

Both sections 21,22 are further provided with apertures 23,24 for fastening of safety belt brackets and seats, respectively. The special connecting/releasing means are schematically depicted in Fig. 1 as two separate locking members 11 and 12, respectively, both locking (engaging) into the first rail 1 and interconnected by means of an arm 3 attached to one of the locking members 11,12. The arm 3 has the following two functions:
a) to unlock the locking member 12 when the locking member 11 is unlocked,
b) to hold sections 21 and 22 together when both systems 11,12 are unlocked.

The function of the new rail system according to the embodiment shown in Fig. 1 is as follows:

During normal operation (adjustment) of seats, the seat locking system 11 is unlocked (released) and both rail sections 21,22 can be moved together freely to a new location. When entering/leaving the rear seat only the locking mechanism 12 is unlocked, whereby the coupling with the arm 3 is also unlocked and the seat can be moved for- and rearward to the original (starting) position, while section 21 remains in the original position.

In the case of collision the rail section 21 risks to become deformed from the safety belt load. However, since the rail 22 can be released by unlocking the member 12, the seat can be moved forward, thus allowing evacuation of the rear seat passengers regardless of deformation of the rear rail section 21.

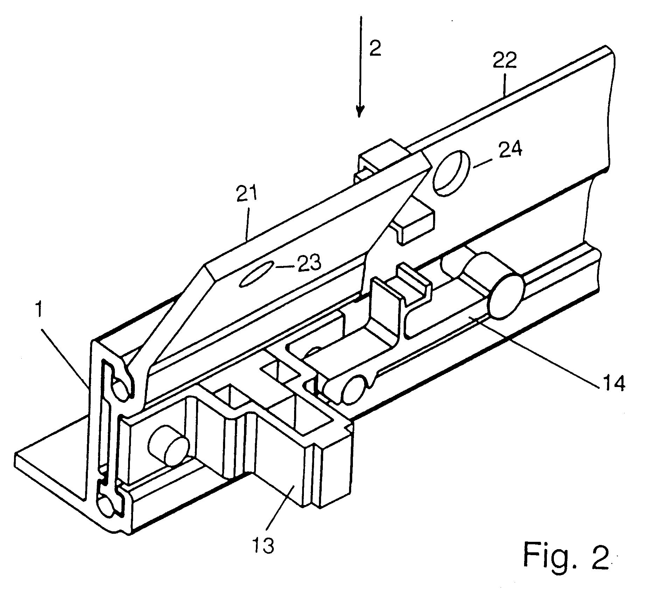

Fig. 2 shows an alternative embodiment of the rail system where the top rail section 21 has an attachment hole 23 for the safety belt. A locking member 13 locks the section into the first rail 1. The front top rail section 22 has an attachment hole 24 for seats. Furthermore, another locking member 14 is provided which locks the two top rail sections 21,22 together.

The system functions in the following manner:

During normal operation (adjustment) of the seat, the locking member 13 is unlocked and both rails can be moved to a new location while the arm of the locking member 14 holds the two top rail sections 21,22 together.

In order to allow entering/leaving the rear seat the arm of the locking member 14 is unlatched and the rail 22 with the attached seat moves forward and back to the original position.

When a collision occurs the rail 22 risks to be deformed due to the transferred load through the safety belt. However, the rail section 21 can be released by means of the arm of the locking member 14 and the seat can be moved forward to give access for evacuation of the rear seat passengers.

Both illustrated systems have their advantages. The locking system according to the embodiment of Fig. 1 ensures that both loads coming from the safety belts and the seats are directly transferred to the first rail through the individual locking members 11,12.

In the system shown in Fig. 2 all (both) loads will be transferred to the first rail through the locking member 13 only, but this solution offers fewer components and will automatically secure that the front rail section 22 is locked when abutting the rear section 21.

As it appears from the above description of Figs. 1-2, the top rail 2 comprises two butt to butt connected sections offering the following advantages compared to the presently known and used rail systems:

The biggest advantage offered by the new concept of a top rail comprising two interconnected sections is, besides the possibility of eliminating the extra rails otherwise required and thus achieving a simplified construction and a weight reduction, the safety gain related to crash situations. Regardless of the degree of the rear rail section deformation, the front section 22 of the top rail can be released from the rear section 21 to which the main loads are directed from the safety belt, thus allowing for the occupants of the rear seats to move the front seat forward into the ultimate front position and to evacuate the vehicle safely.

Furthermore, in a particularly advantageous embodiment of the top rail 2 according to the present invention the rail sections are extruded in a light metal, e.g. aluminium or Al-alloys, having different cross-sectional dimensions adapted to the intended use and load. Referring to Fig. 1, the rear section 21, being normally subjected to a larger load than the front one, is extruded with a thicker wall compared to the thickness of the front section 22, something which allows for a further weight reduction of the seat rail assembly.

The principle of two separate rail sections offers also flexibility with regard to design and accomodation holes 23,24 being not necessarily arranged in one plane or row as in the present one piece systems.

The possibility of extruding all parts and details in one manufacturing operation being inherent to the applied extrusion technique thus offers a variety of shape and functional opportunities to adapt all the components to an optimal function and weight savings, as it appears from Figs. 1-2.

The above discussion has been related to the specific embodiments of the assembly as illustrated by the accompanying Figures. It is, however, contemplated that the present invention is equally applicable to other configurations and embodiments, and various changes and modification may be made to the specifically described and illustrated arrangement provided that one does not depart from the scope of the present invention as defined by the appended claims.

## Claims

1. A seat rail assembly, particularly in a motor vehicle, comprising a first rail (1) and a second rail (2) slideably attached along the longitudinal extension of the first rail (1),
**characterized in** that
the second rail (2) comprises two adjacent sections (21,22) arranged in a butt to butt manner as a rear section (21) and a front section (22), respectively, and in that the sections (21,22) are interconnected by a releasable locking means (3,14).

2. Assembly according to claim 1,
**characterized in** that
the rear section (21) is provided with fastening means (23) for a safety belt bracket and the front section (22) provides means (24) for seat fastening and each section (21,22) is separately locked to the first rail.

3. Assembly according to claim 1 or 2,
**characterized in** that
the adjacent rail sections (21,22) are made of extruded sections having different cross-sectional areas.

4. Assembly according to claim 3,
**characterized in** that
the rear section (21) is dimensioned for heavier load compared to the front section (22).

5. Assembly according to claim 1,
**characterized in** that
the locking means (14) interconnecting the sections (21,22) is a latch system.

## Patentansprüche

1. Sitzschienenaufbau, insbesondere in einem Motorfahrzeug, mit einer ersten Schiene (1) und einer verschiebbar entlang der Längserstreckung der ersten Schiene (1) befestigten zweiten Schiene (2),
dadurch gekennzeichnet,
daß die zweite Schiene (2) zwei benachbarte Abschnitte (21, 22) aufweist, die in einer aneinander anstoßenden Weise als Hinterabschnitt (21) bzw. Vorderabschnitt (22) angeordnet sind, und daß die Abschnitte (21, 22) durch eine lösbare Verriegelungseinrichtung (3, 14) verbunden sind.

2. Aufbau nach Anspruch 1, dadurch gekennzeichnet, daß der Hinterabschnitt (21) mit einer Befestigungseinrichtung (23) für eine Sicherheitsgurtklammer versehen ist und der Vorderabschnitt (22) eine Einrichtung (24) zur Sitzbefestigung vorsieht und jeder Abschnitt (21, 22) separat an der ersten Schiene verriegelt ist.

3. Aufbau nach Anspruch 1 oder 2, dadurch gekennzeichnet, daß die benachbarten Schienenabschnitte (21, 22) aus extrudierten Abschnitten mit verschiedenen Querschnittsflächen hergestellt sind.

4. Aufbau nach Anspruch 3, dadurch gekennzeichnet, daß der Hinterabschnitt (21) im Vergleich zum Vorderabschnitt (22) für eine schwerere Belastung dimensioniert ist.

5. Aufbau nach Anspruch 1, dadurch gekennzeichnet, daß die die Abschnitte (21, 22) verbindende Verriegelungseinrichtung (14) ein Einklinksystem ist.

## Revendications

1. Ensemble à rails pour siège, notamment dans un véhicule à moteur, comprenant un premier rail (1) et un second rail (2) disposé afin qu'il puisse coulisser suivant la longueur du premier rail (1),
caractérisé en ce que :
le second rail (2) comporte deux tronçons adjacents (21, 22) placés bout à bout sous forme d'un tronçon arrière (21) et d'un tronçon avant (22) respectivement, et en ce que les tronçons (21, 22) sont interconnectés par un dispositif amovible de blocage (3, 14).

2. Ensemble selon la revendication 1, caractérisé en ce que le tronçon arrière (21) comporte un dispositif de fixation (23) d'un support de ceinture de sécurité, et le tronçon avant (22) possède un dispositif (24) de fixation de siège, et chaque tronçon (21, 22) est bloqué séparément sur le premier rail.

3. Ensemble selon la revendication 1 ou 2, caractérisé en ce que les tronçons adjacents (21, 22) de rail sont formés de tronçons de profilé ayant des sections différentes.

4. Ensemble selon la revendication 3, caractérisé en ce que le tronçon arrière (21) a des dimensions telles qu'il résiste à des charges plus importantes que le tronçon avant (22).

5. Ensemble selon la revendication 1, caractérisé en ce que le dispositif de blocage (14) assurant l'interconnexion des tronçons (21, 22) est un système à verrou.
